# EUROPEAN PATENT APPLICATION

(11) **EP 1 580 852 A2**
(43) Date of publication of application: **28.09.2005**
(21) Application number: 05004459.3
(22) Date of filing: 01.03.2005
(51) Int. Cl.: H01S 3/131, H01S 3/04

(54) **Laser unit**

(30) Priority: 02.03.2004 JP 2004057626
(71) Applicant: FANUC LTD, Yamanashi 401-0597 (JP)
(72) Inventor: Egawa, Akira, Gotenba-shi Shizuoka 412-0043 (JP); Suzuki, Kazuhiro, Oshino-mura Minamitsuru-gun Yamanashi 40 (JP); Tokito, Hiroaki, Oshino-mura Minamitsuru-gun Yamanashi 40 (JP)
(74) Representative: Schmidt, Steffen J.

(57) **Abstract**

A laser unit which has an improved reliability in a measured value of a power correction coefficient used to correct a laser output command. Immediately before the laser oscillator starts discharging after a power supply is turned on, the initial value of a number (or index) for carrying out a warm-up operation is set to zero. A temperature measuring device measures a temperature of a prescribed part of the laser oscillator, and it is decided whether the measured temperature has reached a predetermined temperature. When the measured temperature has reached the predetermined temperature, a normal laser oscillator start processing is executed, and a power correction coefficient is calculated/updated, thereby ending the process. When the measured temperature has not reached the predetermined temperature, the number of times of carrying out a warm-up operation is checked, and the oscillator executes the warm-up operation until the predetermined temperature is obtained within a given number of times. When the number of times of carrying out the warm-up operation exceeds the given number of times, an alarm is displayed to stop the operation of the laser oscillator. Also, an internal discharge carried out to obtain a power correction coefficient may be utilized for the warm-up operation.

## Description

### BACKGROUND OF THE INVENTION

### 1. Field of the Invention

The present invention relates to a laser unit that is used to carry out laser beam machining, illumination, chemical reaction, power generation, etc. using a laser beam. The invention particularly relates to a laser unit that corrects a laser output.

### 2. Description of the Related Art

As is well known, a laser unit that outputs a laser beam is used for chemical reaction, power generation, etc., as well as for laser beam machining and illumination. In many cases, the laser unit that is used for these purposes requires a technique of correcting a laser beam output. For example, a laser beam machine is required to accurately control the output to maintain machining performance. For this purpose, a command value based on which the output is controlled is corrected, thereby driving the laser unit. Representative factors that require this correction are a change in the orientations of mirrors used for a resonator, and aging of the mirrors due to contamination. In order to compensate for the influence of the aging, a correction coefficient is multiplied by the command value, thereby adjusting the actual output of the laser beam, before carrying out a laser beam machining.

As one of methods for correcting the command value, the following method is available. At a starting time of an oscillator, a ratio of a known reference command value to an actual measured value of the oscillator is obtained. A coefficient (hereinafter referred to as a power correction coefficient, or simply referred to as a correction coefficient) is obtained based on this ratio. This correction coefficient is multiplied by the command value to correct the laser output (refer to Japanese Unexamined Patent Publication (Kokai) No. 64-18285). This method has an advantage in that an expensive detector for monitoring the output is not necessary, and that an accurate laser output can be easily obtained.

This method, however, has the following problems regarding instability of the output at the starting time of the oscillator. In order to determine a reliable correction coefficient, the oscillator is required to operate for a certain time until the oscillation shifts to a stable state. A correction coefficient is obtained after the stable operation state is obtained. To stabilize the operation of the oscillator as soon as possible, a temperature of cooling water supplied to the oscillator is managed. However, at the starting time of the oscillator, a supply of cooling water with insufficient temperature management cannot be avoided. As a result, a measured value of the correction coefficient cannot have high reliability, in many cases. In other words, because the correction coefficient is measured in a state that the aging includes a temperature dependency, the output of the laser oscillator increases until the time the water temperature reaches a predetermined temperature. Consequently, there is a risk that an accurately corrected laser output cannot be obtained.

### SUMMARY OF THE INVENTION

In order to solve the above problems, the present invention provides a laser unit that measures a temperature of a part of an oscillator which influences an output of the oscillator, repeats an internal discharge until when the temperature reaches a predetermined value, and measures a correction coefficient when the temperature reaches a proper value, thereby obtaining a correct laser output. According to the present invention, at the starting time of the oscillator, a temperature of a prescribed part of the oscillator is measured. When the temperature reaches a proper temperature, a ratio of a known reference command value of the laser output to the actual output measured value is calculated, and a correction coefficient is obtained.

When the temperature of the oscillator does not reach a proper temperature, the oscillator carries out an internal discharge for a predetermined time at a predetermined output level. Once a state before starting the discharge is obtained, the temperature of the oscillator is measured again to check whether the temperature has reached the proper temperature. This operation is repeated until the proper temperature is obtained. The temperature of the oscillator reaches the proper temperature in this way. However, when the temperature of the oscillator does not reach the proper temperature even after the above operation is repeated a given number of times (i.e., by a limit number of times), the oscillator can be stopped and an alarm given.

More specifically, the present Invention provides a laser unit including: a laser oscillator; a control device which outputs a laser output command value for controlling a laser beam output from the laser oscillator; a laser application device which carries out at least one of laser beam machining, illumination, chemical reaction, and power generation using a laser beam; a temperature measuring device measuring a temperature of a prescribed part of the laser oscillator or the laser application device; and a correction calculating part calculating a correction coefficient to correct the laser output command value. When a temperature measured by the temperature measuring device at a starting time or during the operation of the laser oscillator is out of a predetermined range of temperature, the control device suspends the operation of the laser application device for a predetermined time, thereby maintaining an operation preparation state. When a temperature measured by the temperature measuring device is within a predetermined range of temperature, the correction calculating part calculates the correction coefficient.

A temperature of a prescribed part of the laser oscillator or the laser application device may be a water temperature of the cooling water that is supplied to the laser oscillator, a temperature of a part of the oscillator within the laser oscillator, or an air temperature inside the laser oscillator.

When the laser application device is in the operation preparation state, the laser oscillator may be kept operated. Both or either one of the laser oscillator and the laser application device can have a display unit which displays an alarm message (i.e., warning) in the operation preparation state. Further, when the measured temperature is lower than a predetermined temperature, a laser start/stop device can warm up the laser oscillator.

The laser start/stop device may stop the operation or the oscillator to give an alarm when the measured temperature does not reach the predetermined temperature even after the laser oscillator is in the warm-up cycle for a predetermined time or even after this cycle is repeated a predetermined number of times. Alternatively, the laser unit may have a display unit for indicating an alarm message, instead of stopping the operation.

The laser start/stop device may give a laser output command value to the laser oscillator for a predetermined time to warm up the laser oscillator, thereby making the laser oscillator carry out a laser oscillation at a predetermined output level for a predetermined time.

The correction calculating part may have an output measuring device for measuring a laser output of the laser oscillator. The laser starter/stopper gives a laser output command value to the laser oscillator for a predetermined time to warm up the laser oscillator, thereby making the laser oscillator carry out a laser oscillation at a certain output level for a predetermined time. When the measured temperature reaches a predetermined temperature, the laser starter/stopper can calculate a ratio of the laser output measured by the output measuring device to the output command value, thereby completing the start operation of the laser oscillator. Further, the correction calculating part may correct the output command value such that the laser output value becomes equal to the command value, based on the ratio obtained from the measured laser output value and the output command value.

When the laser application device is in the operation preparation state and also when the measured temperature is higher than a predetermined temperature, the laser control device may carry out cooling down the laser oscillator. When the measured temperature does not become lower than the predetermined temperature even after the laser oscillator is cooled down for a predetermined time or even after the cool-down cycle is repeated a predetermined, number of times, the controller can stop the operation of the laser oscillator to give an alarm. Alternatively, the display unit may display an alarm message.

When the measured temperature becomes lower than the predetermined temperature by cooling down the laser oscillator, the control device may stop the operation of the oscillator to give an alarm. Alternatively, the display unit may display an alarm message. To cool down the laser oscillator, the control device may make the laser oscillator continue an operation by stopping only the laser oscillation.

### BRIEF DESCRIPTION OF THE DRAWINGS

The above and other objects, features and advantages of the present invention will be made more apparent by the following description of the preferred embodiments thereof, with reference to the accompanying drawings, wherein:
Fig. 1 is a block diagram showing an overview of a configuration of a laser unit according to an embodiment of the present invention;
fig. 2 is a diagram showing a configuration of main parts of a laser oscillator;
Figs. 3a and 3b are flowcharts for explaining a sequence of the operation of the laser unit including warm-up operation according to the embodiment of the invention;
Figs. 4a and 4b are flowcharts of processing to give an alarm when a temperature does not reach a proper range of temperature even after a warm-up cycle is repeated a predetermined number of times, according to the embodiment of the invention;
Fig. 5 is a flowchart of processing to explain that an internal discharge carried out to obtain a power correction coefficient is used for a warm-up operation; and
Fig. 6 is a block diagram showing a basic configuration of the laser unit according to the invention.

### DETAILED DESCRIPTIONS

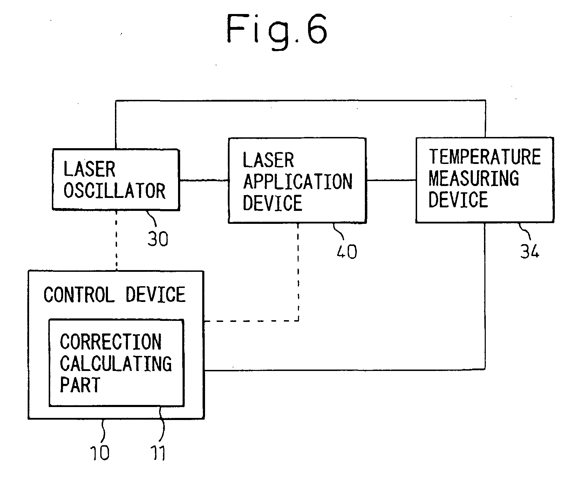

Fig. 6 is a block diagram showing a basic configuration of a laser unit according to the present invention. The laser unit includes: a laser oscillator 30; a control device 10 which outputs a laser output command value for controlling a laser beam output from the laser oscillator 30; a laser application device 40 which carries out at least one of laser beam machining, illumination, chemical reaction, and power generation using a laser beam; a temperature measuring device 34 for measuring a temperature of a prescribed part of the laser oscillator 30 or the laser application device 40; and a correction calculating part 11 calculating a correction coefficient to correct the laser output command value. When a temperature measured by the temperature measuring device 34 at a starting time or during the operation of the laser oscillator 30 is out of a certain range of temperature, the control device 10 suspends the operation of the laser application device 40 for a predetermined time, thereby maintaining an operation preparation state. On the other hand, when a temperature measured by the temperature measuring device 34 is within a predetermined range of temperature, the correction calculating part 11 calculates the correction coefficient.

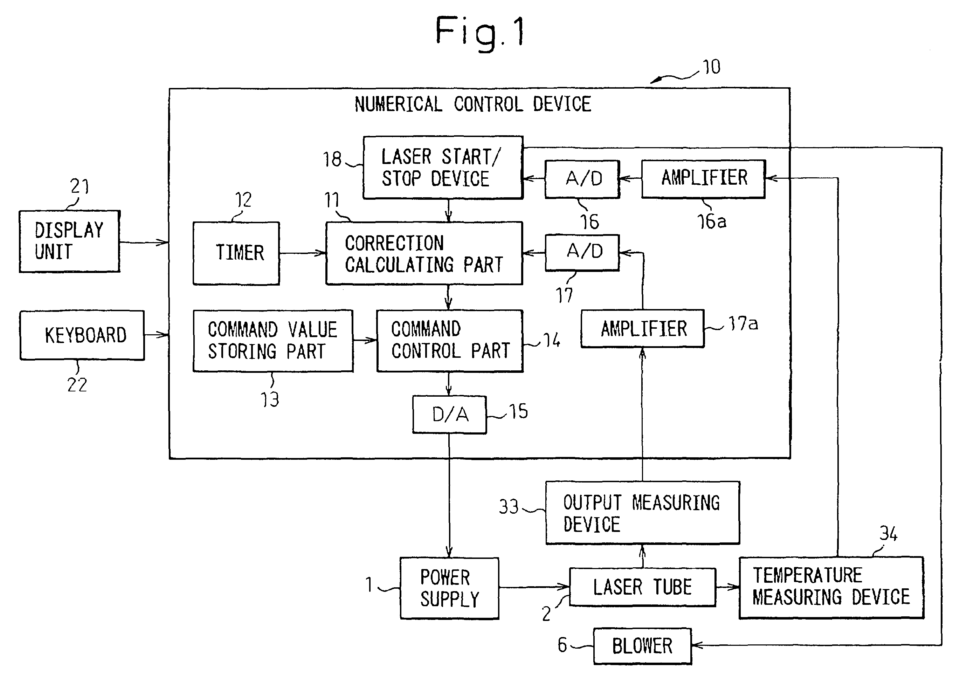

A laser unit according to an embodiment of the present invention is explained below with reference to drawings. Fig. 1 is a block diagram showing an overview of a configuration of the laser unit according to the embodiment of the invention. In Fig. 1, a reference numeral 10 denotes the control device which controls the whole laser application device including the control of a laser oscillator. More specifically, the control device in this case is a computer numerical controller (CNC) for controlling a laser beam machine. When the laser application device carries out illumination, chemical reaction, or power generation using a laser beam, control devices for an illumination unit, a chemical reaction unit, and a power generator are employed respectively. Configurations and functions of parts relevant to the control of the laser oscillator explained below may be basically the same.

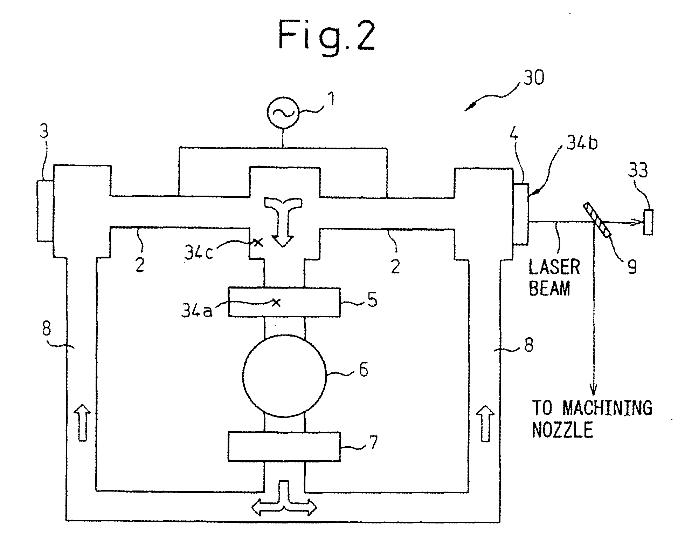

As an internal configuration of the computer numerical control device 10, particularly parts relevant to the control of the laser oscillator based on the application of the invention are shown. The configuration of the main part 30 of the laser oscillator may be a known part, and Fig. 2 shows one example of the main part 30. In Fig. 2, a reference numeral 1 denotes a power supply for a discharge excitation. The power supply 1 applies a high-frequency voltage in a radio frequency domain to an electrode (not shown) of a discharge tube (i.e., a laser tube) 2. In order to generate this high-frequency voltage, there is usually employed a system that once rectifies a three-phase alternate current and outputs a direct current, and converts this direct current output into a high-frequency voltage with an inverter.

The discharge tube 2 is disposed between a rear mirror 3 and an output mirror 4 that constitute an optical resonator. The two mirrors 3 and 4 are held by not shown holding mechanisms. The discharge tube 2 is built in a circular path including heat exchangers 5, 7 and a blower 6, as shown in Fig. 2, and can stream medium gas (i.e., laser gas) 8 through this circular path.

When the discharge excitation power supply 1 is started to generate a discharge, thereby exciting the medium gas 8, a laser beam is generated within the optical resonator. The medium gas 8 reaches a high temperature due to the discharge and, then, is cooled down with the heat exchanger 5 before reaching the blower 6. The blower 6 sucks the cooled medium gas 8, and delivers it to a discharge side under pressure. In this process, the temperature rises due to the compression. The heat exchanger 7 at the discharge side of the blower 6 cools down the medium gas again, thereby restricting a rise in the temperature of the medium gas 8. The medium gas 8 that is delivered from the blower 6 passes through the heat exchanger 7, and is recycled to the discharge tube 2.

A laser start/stop device 18 provided in the computer numerical control device 10 controls the operation of the blower 6. The blower 6 has a known pressure adjusting mechanism (not shown) to deliver the medium gas. The laser start/stop device 18 is configured to be able to start/stop the blower 6 and control the delivery pressure adjusting mechanism (refer to a gas pressure increase command/gas pressure decrease command explained later).

A part of the laser light outputted from the output mirror 4 passes through a translucent mirror 9, and is inputted to a laser output measuring device (i.e., a power detector) 33. The laser output measuring device 33 measures the power of the laser output. A signal that expresses a result of the measurement is amplified by an amplifier 17a within the computer numerical control device 10, is analog-to-digital (A/D) converted by an A/D converter 17, and is inputted to the correcting calculating part 11, as shown in Fig. 1. Functions of the correction calculating part are described later.

As the heat exchangers 5 and 7 are publicly known, their detailed configurations are emitted. In this embodiment, heat exchangers having a large number of tubules for passing cooling water are used. Cooling water at a constant temperature is supplied from a cooling water supply source not shown. A temperature measuring device or a temperature sensor 34 is disposed at a suitable position for measuring an ambient temperature of the resonator. The "suitable position" may be in the water flow or above a flow tube (indicated by a reference numeral 34a) of the cooling water that flows through the heat exchanger 5 before the blower 6, or above a part of the resonator (for example, a part of the output mirror 4; indicated by a reference numeral 34b), or in the flow of the laser gas (indicated by a reference numeral 34c) inside the resonator .

Signals that express measured temperatures of the cooling water, the part of the resonator, and the laser gas are amplified by an amplifier 16a, are A/D converted by an A/D converter 16, and are sent to the laser start/stop device 18, as shown in Fig. 1. The laser start/stop device 18 carries out a warm-up operation of the laser oscillator following a predetermined sequence (described later) until the temperature measured by the temperature measuring device 34 reaches a predetermined value.

The amount of power supplied per unit time from the power supply 1 which drives the discharge tube 2 is calculated following an analog command value obtained by digital-to-analog (D/A) converting, using a D/A converter 15, an output (i.e., a digital command value) of a command control part 14 provided within the computer numerical control device 10. However, as described above, a change occurs between the command value output from the command control part 14 and the laser output value actually obtained, due to a change in the posture of the mirrors 3 and 4 used in the resonator or due to aging attributable to contamination, etc. In order to compensate for this change, a correction coefficient is multiplied by the output value of the command control part 14, and the multiplied result is D/A converted, thereby controlling the power supply 1.

The correction calculating part 11 calculating the correction coefficient includes an internal memory that stores a calculation result. The correcting part 11 may obtain a correction coefficient from a ratio of a laser output reference command value set in advance to the actual output measured value. The output measuring device indicated by the reference numeral 33 measures the actual output measured value (i.e., power of the laser output). The amplifier 17a amplifies the actual output measured value, the A/D converter 17 A/D converts the amplified result, and inputs the A/D converted result to the correction calculating part 11. The timing of calculating the correction coefficient is described later. A memory value of a correction coefficient is updated each time a correction coefficient is calculated.

A timer indicated by a reference numeral 12 informs the correction calculating part 11 about the time necessary to determine the timing of calculating a correction coefficient. A command value storing part indicated by a reference numeral 13 stores a laser output command value to carry out a laser beam machining. Various laser output command values are usually stored. Which one of these laser output command values is to be used is assigned by a laser beam machining program. To execute the laser beam machining, the command control part 14 reads a correction coefficient stored in the correction calculating part 11. The command control part 14 multiplies the read correction coefficient to the laser output command value (for example, a command value according to the laser beam machining program) from the command value storing part 13. The multiplied result is D/A converted by the D/A converter 15, and is then outputted to the power supply 1. As described above, the power supply 1 supplies power to the discharge tube 2 following a given command value. The discharge tube 2 outputs a laser beam according to the supplied power.

Reference numerals 21 and 22 denote a display unit and a keyboard, respectively, which are attached to the computer numerical control device 10 in a known mode, and are used to input a command value, various data, and parameters of a laser beam machine. The display unit 21 uses a cathode ray tube (CRT), a liquid crystal, etc., and may be used to display a position of a laser beam machining head (or a worktable), a move speed, a laser output state, a laser beam machining condition, etc. The display unit 21 may be also used to display messages such as alarms to be described later. The keyboard 22 may be used to input command values of the laser beam machine (i.e., command values stored in the command value storing part 13), and various data, and parameters. The keyboard 22 may be also used to turn on/off the laser beam machine, start a laser beam machining by assigning a machining program, carry out various operations such as a compulsory stop, editing the laser beam machining program, etc.

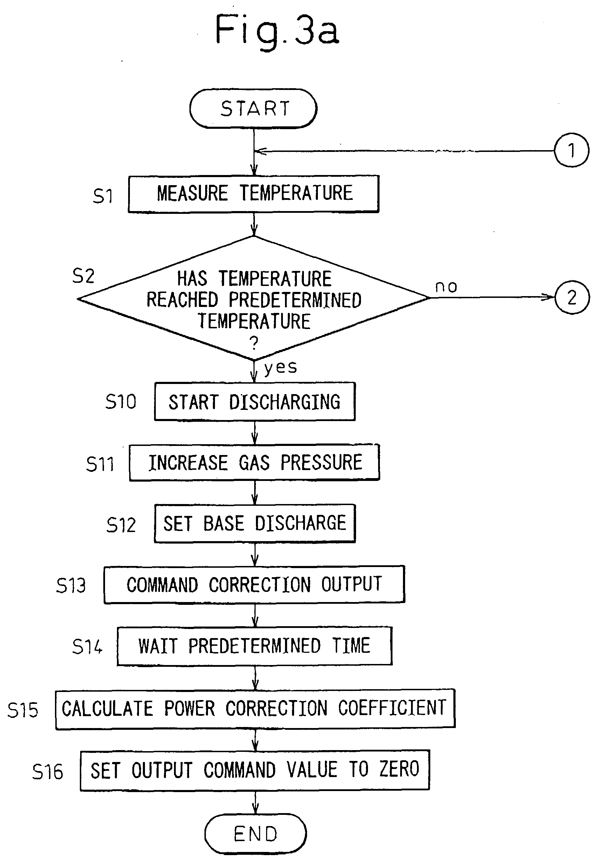

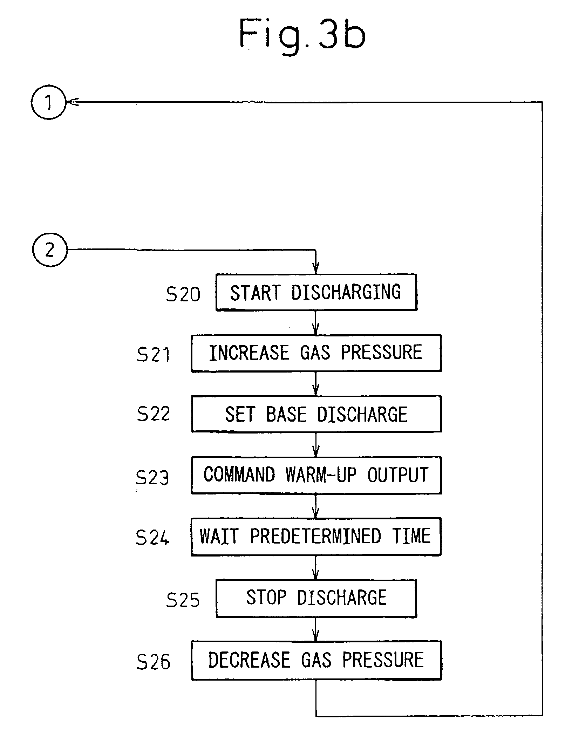

After the power supply 1 is turned on, the laser start/stop device 18 carries out a warm-up operation of the laser oscillator until the temperature measured by the temperature measuring device 34 reaches a predetermined value. Figs. 3a and 3b are flowcharts showing a sequence of the operation of the laser unit including the warm-up operation. A key point of the operation at each step is explained below. This sequence is started immediately before the oscillator starts discharging, after the power supply 1 is turned on to supply power. A central processing unit (CPU) (not shown) of the computer numerical control device 10 controls each element to execute the sequence explained below. A program and parameters used to execute the sequence of operation are stored in a memory (not shown) of the computer numerical control device 10. The key point of operation at each step is explained below.

### Step 1

The temperature measuring device 34 measures a temperature of a prescribed part of the oscillator.

### Step 2

It is decided whether the temperature measured by the temperature measuring device 34 has reached a predetermined temperature. When the temperature measured by the temperature measuring device 34 has reached a predetermined temperature, the process proceeds to step S10, and a normal oscillator start processing is executed, thereby ending the processing. When the temperature measured by the temperature measuring device 34 has not reached a predetermined temperature, the process proceeds to step S20, and a warm-up processing is executed. For the predetermined temperature, a "range of temperature" (for example, a temperature T0-δT~T0+δT; where δT is a permissible range of temperature between an upper and a lower temperatures) at which the laser beam machine (i.e., the laser application device) can operate stably, is set beforehand.

The following operations are carried out at steps S10 to S16 to carry out the normal oscillator start processing.

### Step S10

When it is decided at step S2 that the measured temperature has reached a predetermined temperature, the laser start/stop device 18 starts discharging.

### Step S11

When discharge is started, a laser gas pressure is increased from a pressure at a discharge starting time to a pressure during the oscillation (i.e., the gas delivery pressure of the blower 6 is increased).

### Step S12

When the laser gas pressure has reached the pressure during the oscillation, a discharge voltage is set to a voltage during a base discharge.

### Step S13

In order to calculate a correction coefficient, a preset laser output reference command value is output from the command control part 14, and the laser start/stop device 13 starts an internal discharge.

### Step S14

The laser start/stop device 18 waits for a predetermined time while maintaining the internal discharge. The predetermined time is set in advance in the internal memory of the computer numerical control device 10. The timer 12 is used to measure the predetermined time. In other words, the timer 12 starts measuring time at a point of time when the laser output reference command value is output from the command control part 14. When the timer 12 ends counting the predetermined time read from the internal memory of the computer numerical control device 10, the waiting state is canceled. The process proceeds to step S15.

### Step S15

A power correction coefficient is calculated, and the power correction coefficient stored before this time is updated. In this regard, the initial value of the power correction coefficient that is set at the operation starting time is "1".

### Step S16

An output command value is set to "0", and the processing at the starting time ends.

Thereafter, until the next power correction coefficient is calculated/updated, the power correction coefficient updated at step S15 is used to correct the laser output command value at the machining time. When the measured temperature has not reached the predetermined value at step S2, the following operations are carried out at steps S20 to S26.

### Step S20

The laser start/stop device 18 starts discharging.

### Step S21

When discharge is started, a laser gas pressure is increased from a pressure at a discharge starting time to a pressure during the oscillation (i.e., a gas delivery pressure of the blower 6 is increased).

### Step S22

When the laser gas pressure has reached the pressure during the oscillation, a discharge voltage is set to a voltage during a base discharge.

### Step S23

The laser start/stop device 18 outputs the laser at the output of the warm-up operation and starts an internal discharge.

### Step S24

The laser start/stop device 18 waits for a predetermined time while maintaining the internal discharge. The predetermined time is set in advance in the internal memory of the computer numerical control device 10. The timer 12 is used to measure the predetermined time. In other words, the timer 12 starts measuring time at a point of time when the laser output reference command value is output from the command control part 14. When the timer 12 stops counting the predetermined time read from the internal memory of the computer numerical control device 10, the waiting state is canceled. The process proceeds to step S25.

### Step S25

The internal discharge is stopped after the predetermined time has passed.

### Step S26

The laser gas pressure is decreased from the pressure during the oscillation to the pressure at the discharge starting time (i.e., the gas delivery pressure of the blower 6 is decreased). The process returns to step S1 to carry out the temperature measurement again. When the measured temperature has not reached a predetermined temperature, the operations at steps S20 to S26 are repeated.

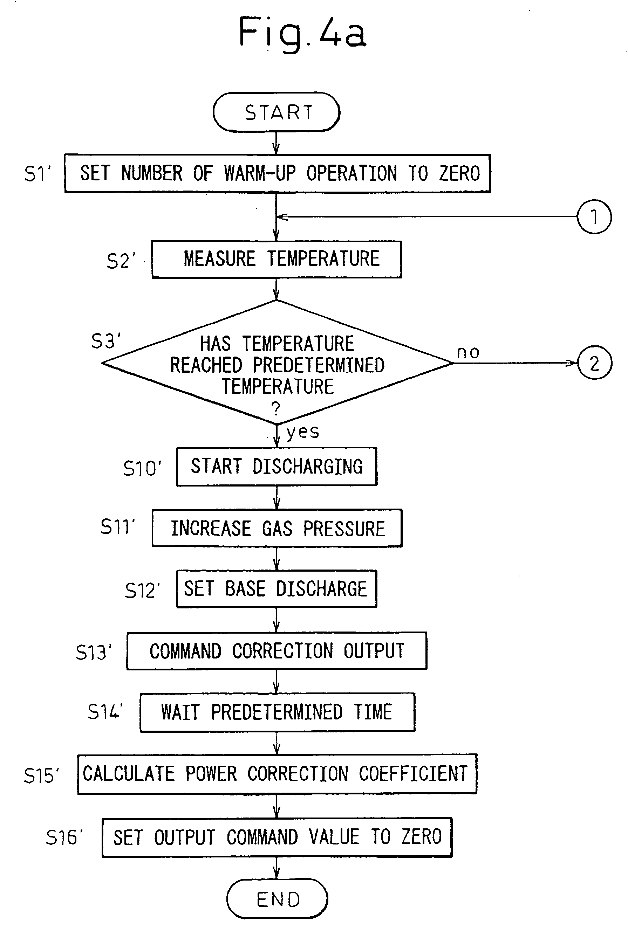

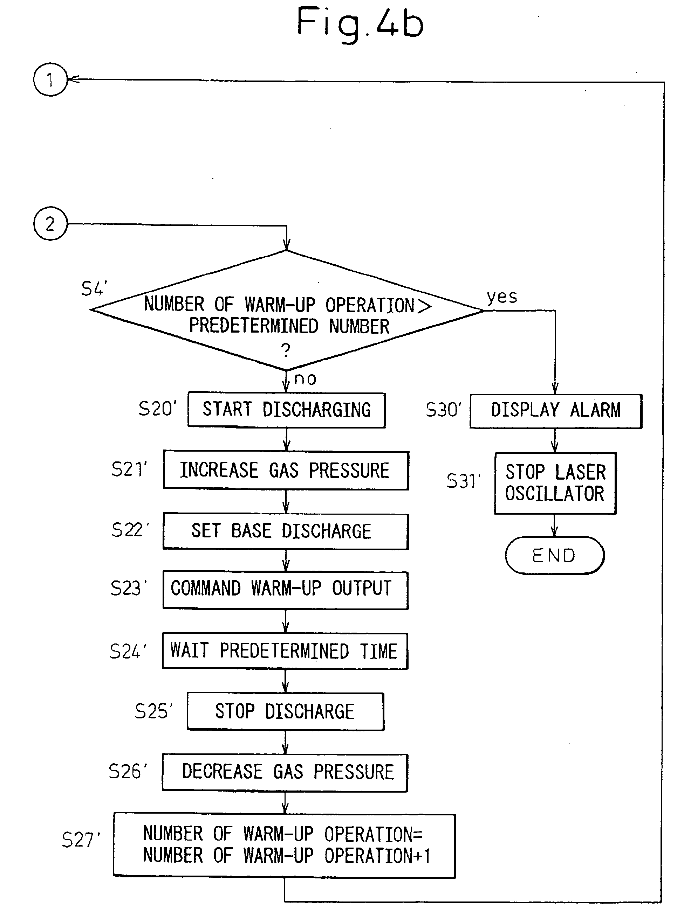

So long as there is no abnormality in the system, the temperature rises while the warm-up operation is repeated several times (for example, ten times), and the process proceeds from step S2 to step S10 and after, thereby ending the processing. However, when there is abnormality in the system, the warm-up operation may be required to be repeated an abnormal number of times (in some cases, the measured temperature does not increase to a predetermined temperature even after the warm-up cycle is repeated many times). On the contrary, a temperature of a prescribed part may increase to an excessively high level. Figs. 4a and 4b are flowcharts of outline processing to prepare for this situation. Key operations at each step are as follows.

### Step SJ.'

A number of repeating the warm-up operation (i.e., a yardstick) is set to the initial value 0.

### Step S2'

The temperature measuring device 34 measures a temperature of a prescribed part of the oscillator.

### Step S3'

It is decided whether the temperature measured by the temperature measuring device 34 has reached a predetermined temperature. When the temperature measured by the temperature measuring device 34 has reached a predetermined temperature, the process proceeds to step S10', and a normal oscillator start process is executed, thereby ending the processing. When the temperature measured by the temperature measuring device 34 has not reached a predetermined temperature, the process proceeds to step S4'. The predetermined temperature may be determined in the same manner as explained in the flowchart shown in Figs. 3a and 3b.

### Step S4'

When the number of times of carrying out the warm-up operation does not exceed a predetermined number (i.e., a limit number of times), the process proceeds to step S20', and the warm-up operation is executed. When the number of times of carrying out the warm-up operation exceeds a predetermined number, the process proceeds to step S30', and an alarm is displayed, thereby stopping the operation of the oscillator. In this regard, the predetermined number of times (i.e., the limit number of times) is set to a value (for example, five times) that is suitable to detect an abnormality in the system.

The operations of the normal oscillator start processing at steps S10' to S16' may be the same as those at steps S10 to S16 in the flowchart shown in Fig. 3a, as follows.

### Step S10'

The laser start/stop device 18 starts discharging.

### Step S11'

When discharge is started, a laser gas pressure is increased from a pressure at a discharge starting time to a pressure during the oscillation. The method of adjusting the laser gas pressure is as described above (This similarly applies to the subsequent explanation).

### Step S12'

When the laser gas pressure has reached the pressure during the oscillation, a discharge voltage is set to a voltage during a base discharge.

### Step S13'

In order to calculate a correction coefficient, a preset laser output reference command value is outputted from the command control part 14, and an internal discharge is started.

### Step S14'

The laser start/stop device 18 waits for a predetermined time while keeping the internal discharge. The timer 12 may be used to wait for the predetermined time as described above (This similarly applies to the subsequent explanation).

### Step S15'

A power correction coefficient is calculated and is updated. The initial value of the power correction coefficient that is set at the operation starting time is "1".

### Step S16'

An output command value is set to "0", and the sequence of processing ends.

When the number of times of carrying out the warm-up operation does not exceed the predetermined value at step S4', the following operations are carried out at steps S20' to S27'. When the number of times of carrying out the warm-up operation exceeds the predetermined value, the following operations are carried out to display an alarm at steps S30' and S31'.

### Step S20'

The laser start/stop device 18 starts discharging.

### Step S21'

When discharge is started, a laser gas pressure is increased from a pressure at a discharge starting time to a pressure during the oscillation.

### Step S22'

When the laser gas pressure has reached the pressure during the oscillation, a discharge voltage is set to a voltage during a base discharge.

### Step S23'

The laser start/stop device 18 outputs the laser at the output of the warm-up operation and starts an internal discharge.

### Step S24'

The laser start/stop device 18 waits for a predetermined time while keeping the internal discharge.

### Step S25'

The internal discharge is stopped after the predetermined time has passed.

### Step S26'

The laser gas pressure is decreased from the pressure during the oscillation to the pressure at the discharge starting time.

### Step S27'

"1" is added to the number (or index) of times of carrying out the warm-up operation. The process returns to step S2' to carry out the temperature measurement. When the measured temperature has not reached a predetermined temperature (i.e., a predetermined range of temperature), the operations at steps S20' to S26' are repeated. When the repeated number of times has exceeded the predetermined value at step S4', the process proceeds to step 330'.

### Step S30'

An alarm display is carried out to indicate that the measured temperature has not reached a proper range of temperature even after the warm-up operation is repeated the predetermined number of times. The display unit 21 may be used for this alarm display.

### Step S31'

The operation of the laser oscillator is stopped, thereby ending the processing.

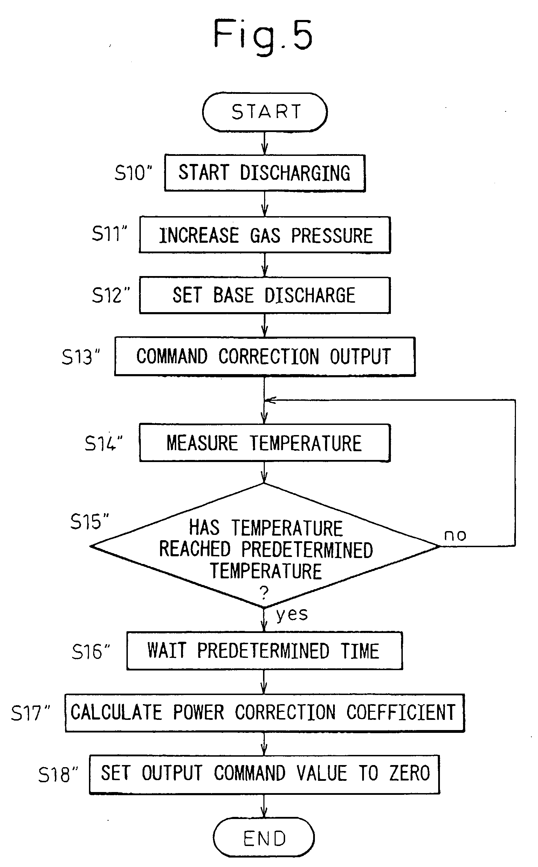

In the sequence of operations explained with reference to the flowcharts shown in Figs. 3a, 3b, 4a and 4b, the calculation/updating of a power correction coefficient and the warm-up operation are explained in the separate flows. However, the internal discharge at the time of obtaining a power correction coefficient may be utilized for the warm-up operation. Fig. 5 shows a flowchart of an outline operation in this case. Key operations at each step are as follows. The sequence of operations is started immediately before starting the discharge of the oscillator after the power supply is turned on.

### Step S10"

The laser start/stop device 18 starts discharging.

### Step S11''

When discharge is started, the laser gas pressure is increased from a pressure at a discharge starting time to a pressure during the oscillation.

### Step S12"

When the laser gas pressure has reached the pressure during the oscillation, a discharge voltage is set to a voltage during a base discharge.

### Step S13"

In order to calculate a power correction coefficient, a preset laser output reference command value is output from the command control part 14, and an internal discharge is started.

### Step S14''

The temperature measurement is carried out while maintaining the internal discharge.

### Step S15"

It is decided whether the measured temperature has reached a predetermined temperature. When the measured temperature has reached a predetermined temperature, the process proceeds to step S16", and a laser start processing is executed. When the measured temperature has not reached a predetermined temperature, the process returns to step S14'' to measure the temperature again.

### Step S16''

When the measured temperature has reached the predetermined temperature, the laser start/stop device 18 waits for a predetermined time.

### Step S17"

After a predetermined time passes, a power correction coefficient is calculated, and the power correction coefficient stored until the time is updated. The initial value of the power correction coefficient that is set at the operation starting time is "1".

### Step S18"

An output command value is set to "0" and the sequence of processing ends.

A laser beam machine carrying out a machining by using a laser beam is mainly explained above as the laser application device. It is needless to mention that the method explained in the above embodiment may be also applied to the laser application device carrying out illumination, chemical reaction, and power generation.

According to the present invention, when the laser oscillator is not in the steady state at the time of starting the oscillator, the laser oscillator automatically executes a warm-up operation, thereby obtaining a steady operation state. With this arrangement, it is possible to obtain a stable laser output immediately after the laser oscillator is started. Further, when a stable laser output cannot be obtained due to a certain abnormality within a period determined by a given limit condition, an alarm may be generated to stop the oscillator, thereby avoiding the operation under an inaccurate correction coefficient.

While the invention has been described with reference to specific embodiments chosen for the purpose of illustration, it should be apparent that numerous modifications could be made thereto, by one skilled in the art, without departing from the basic concept and scope of the invention.

## Claims

1. A laser unit comprising:
a laser oscillator (30);
a control device (10) which outputs a laser output command value for controlling a laser beam output from the laser oscillator (30);
a laser application device (40) which carries out at least one of laser beam machining, illumination, chemical reaction, and power generation using a laser beam;
a temperature measuring device (34) measuring a temperature of a prescribed part of the laser oscillator (30) or the laser application device (40); and
a correction calculating part (11) calculating a correction coefficient to correct the laser output command value, wherein
when a temperature measured by the temperature measuring device (34) at a starting time or during the operation of the laser oscillator (30) is out of a predetermined range of temperature, the control device (10) suspends the operation of the laser application device (40) for a predetermined time, thereby maintaining an operation preparation state, and
when a temperature measured by the temperature measuring device (34) is within a predetermined range of temperature, the correction calculating part (11) calculates the correction coefficient.

2. The laser unit as set forth in claim 1, wherein a temperature of a prescribed part of the laser oscillator (30) or the laser application device (40) is a water temperature of the cooling water supplied to the laser oscillator (30).

3. The laser unit as set forth in claim 1, wherein a temperature of a prescribed part of the laser oscillator (30) or the laser application device (40) is a temperature of a part of the oscillator within the laser oscillator (30).

4. The laser unit as set forth in claim 1, wherein a temperature of a prescribed part of the laser oscillator (30) or the laser application device (40) is an air temperature inside the laser oscillator (30).

5. The laser unit as set forth in claim 1, wherein the laser oscillator (30) is kept operated when the laser application device (40) is in the operation preparation state.

6. The laser unit as set forth in claim 1, wherein at least one of the laser oscillator (30) and the laser application device (40) have a display unit (21) which displays an alarm message in the operation preparation state of the laser application device (40).

7. The laser unit as set forth in claim 1, wherein the control device (10) comprises a laser start/stop device (18) for warming up the laser oscillator (30) when the measured temperature is lower than a predetermined temperature in the operation preparation state of the laser application device (40).

8. The laser unit as set forth in claim 7, wherein the laser start/stop device (18) stops the operation of the oscillator (30) when the measured temperature does not reach the predetermined temperature even after the laser oscillator (30) is in the warm-up cycle for a predetermined time or even after this cycle is repeated a predetermined number of times.

9. The laser unit as set forth in claim 7, wherein the laser unit has a display unit (21) for indicating an alarm message when the measured temperature does not reach the predetermined temperature even after the laser oscillator (30) is in the warm-up cycle for a predetermined time or even after this cycle is repeated a predetermined number of times.

10. The laser unit as set forth in claim 7, wherein the laser start/stop device (18) gives a laser output command value to the laser oscillator (30) for a predetermined time to warm up the laser oscillator (30), thereby making the laser oscillator (30) carry out a laser oscillation at a predetermined output level for a predetermined time.

11. The laser unit as set forth in claim 7, wherein the correction calculating part (11) has an output measuring device (33) for measuring a laser output of the laser oscillator (30),
the laser start/stop device (18) gives a laser output command value to the laser oscillator (30) for a predetermined time to warm up the laser oscillator (30), thereby making the laser oscillator (30) carry out a laser oscillation at a certain output level for a predetermined time, and
the laser start/stop device (18) calculates a ratio of the laser output measured by the output measuring device (33) to the output command value, when the measured temperature reaches a predetermined temperature, thereby completing the start operation of the laser oscillator (30).

12. The laser unit as set forth in claim 11, wherein the correction calculating part (11) corrects the output command value such that the laser output value becomes equal to the command value, based on the ratio obtained from the measured laser output value and the output command value.

13. The laser unit as set forth in claim 7, wherein the laser control device (10) carries out cooling down the laser oscillator (30) when the laser application device (40) is in the operation preparation state and also when the measured temperature is higher than a predetermined temperature.

14. The laser unit as set forth in claim 13, wherein the control device (10) stops the operation of the laser oscillator (30) when the measured temperature does not become lower than the predetermined temperature even after the laser oscillator (30) is cooled down for a predetermined time or even after the cool-down cycle is repeated a predetermined number of times.

15. The laser unit as set forth in claim 13, further comprising a display unit (21) for indicating an alarm message when the measured temperature does not become lower than the predetermined temperature even after the laser oscillator (30) is cooled down for a predetermined time or even after the cool-down cycle is repeated a predetermined number of times.

16. The laser unit as set forth in claim 13, wherein the control device (10) stops the operation of the oscillator (30) when the measured temperature becomes lower than the predetermined temperature by cooling down the laser oscillator (30).

17. The laser unit as set forth in claim 13, further comprising a display unit (21) for indicating an alarm message when the measured temperature becomes lower than the predetermined temperature by cooling down the laser oscillator (30).

18. The laser unit as set forth in claim 13, wherein the control device (10) makes the laser oscillator (30) continue the operation by stopping only the laser oscillation to cool down the laser oscillator (30).
